# EUROPEAN PATENT APPLICATION

(11) **EP 2 842 994 A1**
(43) Date of publication of application: **04.03.2015**
(21) Application number: 13306178.8
(22) Date of filing: 28.08.2013
(51) Int. Cl.: C08K 3/26, C08K 5/1515, C08L 27/06, E04F 15/10

(54) **Recycable synthetic flooring**

(71) Applicant: Tarkett GDL S.A., 9779 Lentzweiler (LU)
(72) Inventor: JUNIOR, Sergio, 9553 Wiltz (LU)
(74) Representative: Blot, Philippe Robert Emile

(57) **Abstract**

The invention concerns a polymeric composition useful for the manufacture of synthetic flooring comprising 75 to 90 wt.% of mineral filler, 5 to 20 wt.% of polyvinyl chloride and 5 to 15 wt.% of additives, characterized in that:
- at least 50 wt.% of the polyvinyl chloride is recycled polyvinyl chloride; and
- at least 50 wt.% of the additives is epoxidyzed soya oil.

It further concerns a method for the manufacture of such composition, the use of such composition for the manufacture of synthetic flooring, in particular vinyl composition tiles (VCT). It finally also concerns synthetic flooring produced from such polymer composition, in particular vinyl composition tiles.

## Description

### [Technical Field]

The present invention concerns the field of synthetic floorings, notably polyvinyl chloride (PVC) flooring, and more particularly vinyl composition tiles (VCT). More specifically, it refers to such floorings which are recyclable and which contain a high content of recycled and/or recyclable materials and materials derived from renewable resources.

### [Background Art]

Vinyl flooring is a popular flooring material since many years. Vinyl flooring is available notably in tile or sheet form. Tile products are often classified in solid and printed vinyl tiles, which have a relatively high content of vinyl resin, and vinyl composition tile (VCT), which comprise primarily mineral filler such as limestone and/or clay in combination with vinyl resin.

As finished flooring materials, VCT has been used extensively in commercial, institutional and public buildings applications such as, for example, malls, schools, healthcare facilities, convention and exposition centers, civic buildings, private office buildings, sports facilities and such. VCT is durable, easy to maintain and more moisture-resistant than many alternative flooring materials. VCT is also a resilient flooring surface, in that the material offers some rebound or resilience property upon compression.

Although durable, vinyl composition tile can ultimately degrade after extended time period of use, and needs then to be replaced. In the past, old or post-consumer vinyl composition tile was landfilled. A substantial amount of vinyl composition tile has been used to cover flooring surfaces in some large buildings. Therefore, a significant amount of scrap vinyl composition tile can be generated when old flooring is replaced. The landfilling of used vinyl composition tile can be subject to laws, regulations and/or ordinance. Since some landfillings may restrict or strictly control landfilling of VCT, disposal can however be problematic and/or costly.

A major obstacle to achieving recyclable vinyl flooring is the presence of substantial quantities of additives such as plasticizers, stabilizers, lubricants, processing aids, pH adjusting agents, wetting agents, dispersants, defoaming agents, viscosity agents and such. Some of these additives are volatile organic compounds and as such have recently been under some scrutiny.

While vinyl flooring is a rather economic flooring solution, possibilities to reduce costs are still of interest. In that respect, the use of recycled materials is particularly interesting as such materials are economical, easily available in large quantities and because their use contributes to reduce waste volume. In particular PVC resins obtained from recycled PVC waste may be used for the manufacture of low cost synthetic flooring. Also, it is interesting to use resources that are available locally and thus require little transportation.

However, formulations including recycled PVC may not show the optimum properties profile, notably with regard to abrasive resistance.

### [Technical Problem]

The present invention aims to provide synthetic flooring, notably PVC flooring such as vinyl composition tiles (VCT), which is recyclable. It further aims to provide such a surface flooring which has a high content in recycled and/or recyclable and materials derived from renewable resources and a low content in volatile organic compounds (VOC). It also aims to provide a composition for the manufacture of synthetic flooring comprising ingredients that are cheap and locally available. It finally also aims to provide a synthetic flooring which shows a satisfactory properties profile, notably with regard to abrasion resistance.

### [Solution to Problem]

It has been surprisingly found that the above technical problems may be solved according to the invention by use of a polymeric composition comprising 75 to 90 wt.% of mineral filler, 5 to 20 wt.% of polyvinyl chloride and 5 to 15 wt.% of additives, characterized in that:
- at least 50 wt.% of the polyvinyl chloride is recycled polyvinyl chloride; and
- at least 50 wt.% of the additives is epoxidyzed soya oil.

Indeed, while at least half of the PVC in this formulation is replaced by recycled PVC, the polymer composition as defined above may be transformed into a recyclable synthetic flooring which exhibits a satisfactory properties profile.

Within the above formulation, it was discovered in particular that epoxydized soya oil, which is of natural origin and thus constitutes a renewable resource readily available, may advantageously replace part or all of the plasticizer and stabilizer additives conventionally added. Accordingly, the presence of synthetic additives in the formulation is reduced and the flooring has an advantage in recyclability. Furthermore, the formulation contains less volatile organic compounds (VOC) and thus yields a product that is more environmentally friendly.

### [Summary of Invention]

According to a first aspect, the invention is directed to a polymeric composition useful for the manufacture of synthetic flooring comprising 75 to 90 wt.% of mineral filler, 5 to 20 wt.% of polyvinyl chloride and 5 to 15 wt.% of additives, characterized in that:
- at least 50 wt.% of the polyvinyl chloride is recycled polyvinyl chloride; and
- at least 50 wt.% of the additives is epoxidyzed soya oil.

Preferably, the recycled polyvinyl chloride is recycled polyvinyl chloride blister. Particularly preferred is such a composition wherein at least 75 wt.% of the polyvinyl chloride is recycled polyvinyl chloride.

Preferably, the polymeric composition further comprises 2,5 to 5 wt.% of epoxidized soya bean oil.

Further preferred is a polymeric composition comprising 80 to 90 wt. % of mineral filler. Preferred is a composition wherein the mineral filler comprises dolomite. Particularly preferred is such a composition that further comprises talc.

According to a preferred embodiment, the polymeric composition according to the invention comprises:
- 80 to 90 wt.% of mineral filler;
- 5 to 10 wt.% of recycled PVC;
- 2,5 to 5 wt.% of epoxidized soya oil;
- 1 to 5 wt.% of PVC;
- 0,5 to 1,5 wt.% of pigment; and
- up to 11 wt.% of one or more additives chosen from plasticizers, stabilizers, lubricants, processing aids, pH adjusting agents, wetting agents, dispersants, defoaming agents, and viscosity agents.

A particularly preferred formulation comprises as a further additive 0 to 3 wt.% of a lubricant such as hydrocarbon resin.

According to a second aspect, the invention is directed to a process for the manufacture of synthetic flooring, comprising the steps of:
(i) providing a polymeric composition as disclosed above;
(ii) transforming said composition into tiles or sheets by thermoforming.

Step (ii) of the process above is preferably carried out by calendering, molding or extrusion.

According to a third aspect, the invention is directed to the use of the composition as disclosed above for the manufacture of synthetic flooring, in particular vinyl composition tiles (VCT).

According to a fourth aspect, the invention is directed to synthetic flooring produced from the polymer composition as disclosed above, in particular in form of vinyl composition tiles (VCT).

### [Detailed Description]

The present invention is directed to synthetic flooring which is recyclable and which comprises a high content of recycled and/or recyclable material or material from renewable resources.

The polymeric composition according to the invention used to manufacture synthetic flooring comprises as a major component a filler, further a binder, generally a polymer such as polyvinyl chloride (PVC) and further additives, such as plasticizers, stabilizers, lubricants or pigments.

Surprisingly, it was found that such synthetic flooring could be obtained using a polymeric composition where at least 50 wt.% of the polyvinyl chloride is recycled polyvinyl chloride and at least 50 wt.% of the additives is epoxidized soya oil.

So as to confer to the polymer composition the suitable rigidity and other properties, the composition comprises as a first and main component a filler.

Within the present invention, the term "filler" designates an inert compound, notably a mineral compound. The chemical nature and particle size of the filler is not specifically limited within the present invention. However, most often fillers are chosen among calcium carbonate, calcium magnesium carbonate such as dolomite, talc, wollatonite and silica. Preferred filler within the present polymeric composition is dolomite, eventually in association with talc, as it is economical and readily available, and provides superior properties.

A particularly preferred polymer composition comprises 75 to 90 wt.%, notably 80 to 88 and more specifically 82 to 86 wt.% of such mineral filler. A particularly preferred polymeric composition comprises 80 to 84 wt. % of dolomite and 1 to 3% of talc.

The second component of the polymeric composition is the binder, which is within the present invention based on polyvinyl chloride.

The polymer composition comprises 5 to 20, preferably 6 to 15 and more specifically 8 to 12 wt.% of polyvinyl chloride (PVC).

One of the major advantages of the present invention is the high content in recycled PVC that may be incorporated into the formulation. Recycled PVC is commercially available notably in granulated or in powder form. Both forms are convenient. Particularly preferred in recycled PVC blister.

Preferably, at least 50 wt.%, preferably at least 70 wt.% and in particular at least 75 wt.% of the polyvinyl component of the polymer composition useful for the manufacture of the recyclable synthetic flooring is recycled PVC.

The third component of the polymeric composition is comprised of the additives. In principle, such a polymeric composition may comprise a large number of different additives such as plasticizers, stabilizers, pigments, lubricants, processing aids, pH adjusting agents, wetting agents, dispersants, defoaming agents, and viscosity agents.

However, as the recycled PVC already comprises additives, addition of only minor amounts of further additives is generally required. Further, the selection of epoxidized soya oil allows to further lower the quantity of added synthetic compounds. Indeed, epoxidized soya oil may act both as a plasticizer and a stabilizer while also being of vegetal origin and thus a renewable material.

Advantageously, the polymeric composition contains 1 to 15 wt.%, preferably 2 to 12,5 and in particular 2 to 10 wt.% of additives. However, according to a preferred embodiment, the polymeric composition contains at most 5 wt.%, preferably at most 4 wt.% and in particular at most 3 wt.% of synthetic, non renewable additives.

In particular, the polymeric composition preferably does not contain any additional volatile organic compound, such as added plasticizer. However, it may be indicated in specific cases to further add pigments, stabilizers, and/or processing aids to the formulation. Further additives may thus comprise in particular pigment and a lubricant such as hydrocarbon resin.

In order to allow for decorative color and patterns, the polymeric composition generally comprises 0,5 to 1,5 wt.% of pigment, which may be chosen among the pigments conventionally used in the field.

So as to facilitate manufacture and improve flexibility of the product, the polymeric composition may further comprise a lubricant such as hydrocarbon resin. Such lubricant may be present in the polymeric composition in particular at 0,5 to 3 wt.%.

Advantageously, the polymeric composition according to the invention comprises
- 75 to 90 wt.%, notably 80 to 88 and more specifically 82 to 86 wt.% of mineral filler;
- 5 to 20 wt.% 5 to 20, preferably 6 to 15 and more specifically 8 to 12 wt.% of polyvinyl chloride; and
- 2 to 15 wt.%, preferably 5 to 10 wt.% of additives, wherein the additives comprise:
   ○ at least 50 wt.% of epoxidyzed soya oil;
   ○ 10 to 25, preferably 15 to 30 wt. % of pigment; and
   ○ up to 40, preferably 5 to 25 wt. % of one or more additives chosen from plasticizers, stabilizers, lubricants, processing aids, pH adjusting agents, wetting agents, dispersants, defoaming agents, and viscosity agents.

The pigment in the polymeric composition is preferably a white mineral pigment such titanium dioxide. Preferred pigments have an average particle size of 0.01 to 10, preferably between 1.1 and 1 µm.

Most preferred within the present invention is a polymeric composition comprising:
- 80 to 84 wt.% of dolomite;
- 5 to 10 wt.% of recycled polyvinyl chloride (PVC);
- 2,5 to 5 wt.% of epoxidized soya oil;
- 1 to 5 wt.% of polyvinyl chloride;
- 1 to 3 wt.% of talc;
- 0 to 3 wt.% of hydrocarbon resin; and
- 0,5 to 1,5 wt.% of pigment.

According to a second aspect, the invention is directed to a process for the manufacture of synthetic flooring, comprising the steps of:
(i) providing a polymeric composition as disclosed above;
(ii) transforming said composition into tiles or sheets by thermoforming.

Step (ii) of the process above is preferably carried out by calendering, molding or extrusion.

According to a third aspect, the invention is directed to the use of the composition as disclosed above for the manufacture of synthetic flooring, in particular vinyl composition tiles (VCT).

The manufacture of such flooring is well-known in the art. Advantageously, the polymeric composition according to the present invention may be used with the processes without requiring any modification.

According to a fourth aspect, the invention is directed to synthetic flooring produced from the polymer composition as disclosed above, in particular in form of vinyl composition tiles (VCT).

The flooring thus produced is economical since it uses recycled and renewable resources. The resources are cheap and locally available products. It contains a reduced quantity of volatile organic compounds, which makes it appropriate for many uses. It finally may be recycled after use, thus facilitating its replacement and reducing its environmental impact.

The invention will be described more in detail in the following example.

### [Examples]

### EXAMPLE 1

### Preparation of synthetic flooring

A decorative vinyl composition tile (VCT) synthetic flooring is manufactured as follows.

A sheet based on recycled PVC is prepared by kneading in a rolling mill 82,18 t.% of dolomite, 7,5 weight parts of post-industrial PVC (recycled PVC blister), 3,67 wt.% of epoxidized soya oil, 2,5 wt.% of PVC S copolymer, 2 wt. % of talc, 1,3 wt. % of hydrocarbon resin and 0,85 wt.% of pigment at 160°Cto 190°C, and rolling to a thickness of 0.5 mm.

The flooring is manufactured by solidifying the assembly of the surface layer sheet on top of the substrate layer sheet by applying pressure and pressing in a press and preheating to a temperature of 140 ° C to 170 ° C.

**Table 1: Composition of the polymeric composition**

| **Component** | | **Composition** |
|---|---|---|
| **Product** | **Function** | [wt. %] |
| Dolomite | Mineral filler | 82,18 |
| Recycled PVC blister | PVC | 7,5 |
| Epoxidized soya oil | Plasticizer / Stabilizer | 3,67 |
| PVC S copolymer | PVC | 2,5 |
| Talc | Mineral filler | 2 |
| Hydrocarbon resin | Lubricant | 1,3 |
| | Pigment | 0,85 |
| Total | | 100 |

The synthetic flooring prepared in example 1 showed very satisfactory properties, notably in terms of abrasion resistance, and thus does not require addition of glass beads.

The PVC flooring is manufactured from a polymeric composition that comprises ingredients which are cheap and locally available. The polymeric composition comprises indeed more than 95 wt.% of recycled, recyclable or from renewable materials and has a low content in added volatile organic compounds (VOC). The flooring obtained is further recyclable. The present invention thus provides for a low cost synthetic flooring with a substantially reduced environmental impact.

## Claims

1. A polymeric composition useful for the manufacture of synthetic flooring comprising 75 to 90 wt.% of mineral filler, 5 to 20 wt.% of polyvinyl chloride and 5 to 15 wt.% of additives, **characterized in that**:
- at least 50 wt.% of the polyvinyl chloride is recycled polyvinyl chloride; and
- at least 50 wt.% of the additives is epoxidyzed soya oil.

2. The polymeric composition according to claim 1, wherein the recycled polyvinyl chloride is recycled polyvinyl chloride blister.

3. The polymeric composition according to claim 1 or 2, wherein at least 75 wt.% of the polyvinyl chloride is recycled polyvinyl chloride.

4. The polymeric composition according to any of claims 1 to 3, comprising 2,5 to 5 wt.% of epoxidized soya bean oil.

5. The polymeric composition according to any of claims 1 to 4, comprising 80 to 90 wt. % of mineral filler.

6. The polymeric composition according to any of claims 1 to 5, wherein the mineral filler comprises dolomite.

7. The polymeric composition according to any of claims 1 to 6, comprising:
- 80 to 90 wt.% of mineral filler;
- 5 to 10 wt.% of recycled PVC;
- 2,5 to 5 wt.% of epoxidized soya oil;
- 1 to 5 wt.% of PVC;
- 0,5 to 1,5 wt.% of pigment; and
- up to 11 wt.% of one or more additives chosen from a plasticizers, stabilizers, lubricants, processing aids, pH adjusting agents, wetting agents, dispersants, defoaming agents, and viscosity agents.

8. The polymeric composition according to claim 7, wherein the formulation comprises as a further additive 0 to 3 wt.% of a lubricant.

9. The polymeric composition according to claim 8, wherein the lubricant is hydrocarbon resin.

10. The polymeric composition according to claim 8 or 9, wherein the processing aid is talc.

11. A process for the manufacture of synthetic flooring, comprising the steps of:
(i) providing a polymeric composition according to any of claims 1 to 10;
(ii) transforming said composition into tiles or sheets by thermoforming.

12. The process according to claim 10, wherein step (ii) is carried out by calendering, molding or extrusion.

13. Use of the composition according to claim 1 to 10 for the manufacture of synthetic flooring, in particular vinyl composition tiles (VCT).

14. Synthetic flooring produced from the polymer composition as defined in any of claims 1 to 10.

15. Synthetic flooring according to claim 14, in form of vinyl composition tiles (VCT).
